(19) Europäisches Patentamt
European Patent Office
Office européen des brevets

(11) EP 1 263 901 B1

(12) # EUROPÄISCHE PATENTSCHRIFT

(45) Veröffentlichungstag und Bekanntmachung des Hinweises auf die Patenterteilung:
**31.03.2004 Patentblatt 2004/14**

(21) Anmeldenummer: **01907479.8**

(22) Anmeldetag: **23.01.2001**

(51) Int Cl.$^7$: **C09D 167/07**, C09D 5/03

(86) Internationale Anmeldenummer:
**PCT/EP2001/000706**

(87) Internationale Veröffentlichungsnummer:
**WO 2001/055268 (02.08.2001 Gazette 2001/31)**

(54) **STRAHLENHÄRTBARE PULVERLACKE**
RADIO-HARDENABLE POWDER PAINTS
PEINTURES PULVERULENTES RADIODURCISSABLES

(84) Benannte Vertragsstaaten:
**AT BE CH CY DE DK ES FI FR GB GR IE IT LI LU MC NL PT SE TR**

(30) Priorität: **24.01.2000 DE 10002805**

(43) Veröffentlichungstag der Anmeldung:
**11.12.2002 Patentblatt 2002/50**

(73) Patentinhaber: **BASF Coatings AG**
**48165 Münster (DE)**

(72) Erfinder:
- **BLUM, Rainer**
**67069 Ludwigshafen (DE)**
- **HINTZE-BRUENING, Horst**
**48165 Münster (DE)**
- **MEISENBURG, Uwe**
**47051 Duisburg (DE)**

(74) Vertreter: **Isenbruck, Günter, Dr.**
**Isenbruck, Bösl, Hörschler, Wichmann, Huhn, Patentanwälte**
**Theodor-Heuss-Anlage 12**
**68165 Mannheim (DE)**

(56) Entgegenhaltungen:
**WO-A-86/03757** **WO-A-97/25361**
**DE-A- 19 600 136**

EP 1 263 901 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft mit energiereicher Strahlung härtbare Pulverlacke und ein Verfahren zum Beschichten oder Lackieren von Substratoberflächen mit einem solchen Pulverlack.

Die Beschichtung bzw. Lackierung von beliebigen Substraten mit strahlenhärtbaren Pulverlacken, bevorzugt UV-härtbaren Pulverlacken, gewinnt zunehmend an Interesse. Man erwartet Vorteile aus der gegenüber rein thermisch härtbaren Systemen theoretischen Trennung des Aufschmelzprozesses und der Härtungsreaktion.

Bei der praktischen Entwicklung solcher UV-Pulverlacke wurden jedoch eine Reihe von Problemen offensichtlich. Diese ergeben sich bei den meisten Polymeren im wesentlichen aus der Unvereinbarkeit der gewünschten Blockfestigkeit der Pulver einerseits und der erforderlichen Elastizität der ausgehärteten Lackfilme andererseits. Werden die Polymere, die Grundlage für den jeweiligen UV-Pulverlack sind, so hart eingestellt, daß blockfeste Pulver resultieren, sind die nach der Aushärtung resultierenden Lackfilme spröde.

Die meisten der bekannten UV-Pulverlacke basieren auf acrylisch und/oder vinylisch ungesättigten Polymersystemen. Ein großes technisches Problem dieser Systeme ergibt sich aus der Gefahr der vorzeitigen thermisch aktivierten Polymerisation der Einzelkomponenten bei deren Herstellung und bei der in der Regel im Schmelzextruder erfolgenden Konfektionierung zu gebrauchsfertigen Lacken. Besonders kritisch ist das Aufschmelzen der applizierten Beschichtungen vor der Strahlenvernetzung. Dabei sind möglichst hohe Temperaturen erwünscht, um möglichst niedrige Schmelzviskositäten zu erreichen. Bei Versuchen mit bekannten acrylisch ungesättigten Systemen zeigte sich, daß wegen dieser vorzeitigen thermisch aktivierten Polymerisation der erhoffte Effekt eines besseren Verlaufs nicht erreicht werden konnte.

Durch die DE-A-31 07 450 sind ungesättigte Polyester mit Oligomeren des Cyclopentadiens als Endgruppen bekannt geworden, die in Form von Lösungen in ethylenisch ungesättigten Monomeren zur Herstellung von Formkörpern und Überzügen Verwendung finden können. Als solche ethylenisch ungesättigten Monomere werden die üblichen copolymerisierbaren Vinylmonomeren oder Monomerengemische angegeben, wie z. B. Styrol, Vinyltoluol, Divinylbenzol, Diallylphthalat und Methylmethacrylat.

Durch die EP-A-0 101 585 sind ungesättigte Polyesterharze bekannt, die durch Addition von Cyclopentadien an die Doppelbindung des Polyesters modifiziert und dann in Vinylmonomeren aufgelöst werden.

In der EP-A-0 585 742 werden ungesättigte kristalline Polyester mit acrylisch ungesättigten Polyurethanacrylaten kombiniert, um die Blockfestigkeit zu erhöhen.

Die EP-A-0 636 669 beschreibt Pulverlack-Mischungen aus ungesättigten Polyestern oder acrylisch ungesättigten Polyacrylaten mit Vernetzern, insbesondere Polyurethanvernetzern, die mit Vinylethern, Vinylestern oder (Meth-)Acrylestern funktionalisiert sind. Aus den Beispielen dieses Dokuments ist lediglich eine Mischung aus einem Polyester mit einem Vinyletherurethan zu entnehmen.

Als weiteres Dokument beschreibt die WO 99/14254 Kombinationen aus ungesättigten Polyestern oder ungesättigten Polyacrylaten mit Vernetzern, bevorzugt Polyurethanen, welche mit einem (Poly-)Isocyanat und Vinylethern oder ungesättigten Alkoholen funktionalisiert sind.

Ausgehend von diesem Stand der Technik lag der vorliegenden Erfindung die Aufgabe zugrunde, mit energiereicher Strahlung, bevorzugt UV-Licht, härtbare Pulverlacke bereitzustellen, die eine ausreichende thermische Stabilität beim Auftragen, d. h. beim Schmelzprozeß, verbunden mit einer ausreichenden blockfesten Härte aufweisen und dennoch nach der Aushärtung elastische Lackfilme ergeben.

Gelöst wurde diese Aufgabe durch Pulverlacke, die ein ungesättigtes Polyesterharz (A) und einen polymeren Vernetzer (B) mit, bezogen auf die Polymerhauptkette, terminalen und/oder seitenständigen Propenyl-, Butenylund/oder Isoprenylgruppen, enthalten, wobei das ungesättigte Polyesterharz (A) und/oder der polymere Vernetzer (B) Struktureinheiten der allgemeinen Formel I und/oder II aufweisen.

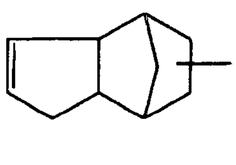

(I)

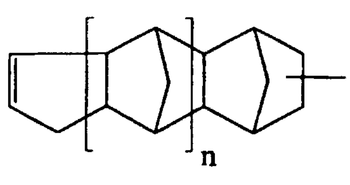

(II)

n=1-10

Die erfindungsgemäßen neuen Pulverlacke sind mit energiereicher Strahlung, bevorzugt UV-Licht, härtbar und zeichnen sich vor allem durch eine sehr gute Viskositätsstabilität bei der in der Schmelze erfolgenden Herstellung der Harze und der Konfektionierung der Lacke, durch hervorragende Lackeigenschaften und durch eine geringe Sauerstoffempfindlichkeit bei der bevorzugt aus der Schmelze erfolgenden Härtung aus. Die sich nach der Härtung ergebenden Filme zeigen außerdem eine hervorragende Elastizität.

Grundsätzlich können die erfindungsgemäßen Pulverlacke auch durch Wärme mit thermisch radikalliefernden Startern, wie Peroxiden, Azostartern oder C-C-labilen Verbindungen gehärtet werden. In diesem Zusammenhang ist insbesondere eine Kombination der beiden genannten Härtungsmethoden erwähnenswert, die auch unter dem Begriff "dual curing" bekannt geworden ist. Dabei wird zunächst die Härtung zu einem sogenannten B-Zustand, d. h. einem teilgehärteten Zustand, durchgeführt, dann die Härtung unterbrochen und zu einem späteren Zeitpunkt wieder nach einem anderen Mechanismus gestartet.

Die erfindungsgemäßen neuen Pulverlacke zeichnen sich durch einen verbesserten Verlauf beim Auftragen auf das zu beschichtende bzw. zu lackierende Substrat aus. Durch den Dicyclopentadiengehalt der Pulverlacke ergeben sich außerordentlich hohe UV-Reaktivitäten. Dabei sind die Dicyclopentadienmodifizierten Polyester außerdem auf eine ausreichende blockfeste Härte eingestellt.

Die Polyesterharze (A) der erfindungsgemäßen Pulverlacke bestehen aus an sich bekannten ungesättigten Polyesterharzen mit Struktureinheiten der allgemeinen Formel I und/oder II, die abgeleitet sind von Dicyclopentadien (DCPD). Die Polyesterharze werden dabei nach bereits im Stand der Technik bekannten Methoden aufgebaut, in der Regel durch Polykondensation von mehrfachfunktionellen Hydroxylverbindungen mit mehrfachfunktionellen Säuren bzw. deren Anhydriden bei höheren Temperaturen. Weiter ist es oft vorteilhaft, von den Estern solcher Verbindungen auszugehen und die Polyester durch Umesterung bei höheren Temperaturen zu erhalten, weil solche Umesterungen leichter und schneller ablaufen können als die direkte Veresterung. Der ungesättigte Charakter der Polyester entsteht durch die Mitverwendung von ungesättigten Verbindungen in der Säurekomponente und/oder ungesättigten Alkoholkomponenten, wie z. B. Alkendiolen und/oder oxalkylierten Alkendiolen. Bevorzugt werden ungesättigte Polyesterharze mit Maleinsäure bzw. Maleinsäureanhydrid und/oder Fumarsäure erhalten, weil diese Verbindungen technisch verfügbar und kostengünstig sind. Weiter können durch (Mit-)Verwendung von mehrfachfunktionellen Aminen Polyester mit Amidstrukturen erhalten werden. Auch die Mitverwendung monofunktioneller Einsatzstoffe ist möglich, z. B. um das Molekulargewicht zu regulieren. Im folgenden werden exemplarisch Verbindungen, die zum Aufbau der Polyesterharze geeignet sind, genannt.

Solche geeigneten Verbindungen sind beispielsweise:

Adipinsäure, Korksäure, Phthalsäureisomere, Tetrahydrophthalsäure, Endomethylentetrahydrophthalsäure, Hexahydrophthalsäure, Fumarsäure, Maleinsäure, Itaconsäure, Citraconsäure, Trimellitsäure, Pyromellitsäure, Ethylenglykol, Polyethylenglykole, Propylenglykol, Polypropylenglykole, Butandiolisomere, Hexandiol, Neopentylglykol, Trimethylolpropan, Glyzerin, Pentaerythrit, Bisphenol A, hydriertes Bisphenol A, OH-polyfunktionelle Polymere, wie hydroxylgruppenmodifizierte Polybutadiene oder Hydroxylgruppen-tragende Polyurethanprepolymere und Epoxidharze, polyfunktionelle Naturstoffe oder deren Folgeprodukte, wie Leinölfettsäure, Dimer- und Polymerleinölfettsäure, Rizinusöl und Rizinusölfettsäure. Zusätzlich zu den exemplarisch genannten Verbindungen sind für den Aufbau der Polyester auch die weiter unten in Hinblick auf den polymeren Vemetzer (B) angegebenen Hydroxylverbindungen geeignet. Die Einführung von Amid- und Imidstrukturen in Polyesterharze ist beispielsweise aus der DE-A-15 700 273 und DE-A-17 200 323 bekannt. Solche Polyesteramide oder Polyesterimide können besondere Anforderungen, z. B. an die Wärmefestigkeit, häufig besser erfüllen als reine Polyester.

Die Struktureinheiten der allgemeinen Formel I und/oder II werden jeweils bevorzugt über Addukte von Dicyclopentadien oder dessen Oligomeren an $\alpha,\beta$-ungesättigte Carbonsäuren oder deren Anhydride eingeführt. Sehr leicht zugänglich sind die Addukte von Maleinsäureanhydrid und Wasser an DCPD gemäß der allgemeinen Formel III und/oder IV.

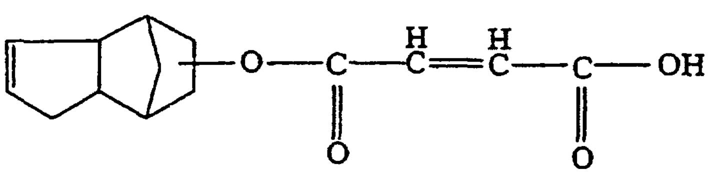

(III)

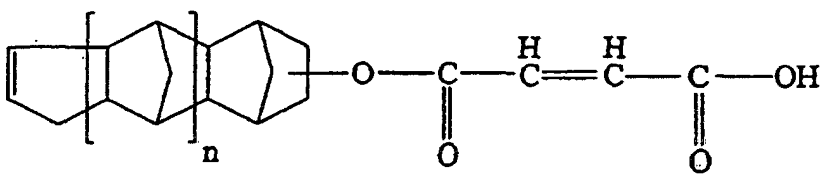

(IV)

n = 1 - 10

Der polymere Vernetzer (B) kann zusätzlich zu dem ungesättigten Polyesterharz gesättigte Polyester mit Struktureinheiten der allgemeinen Formel I und/oder II enthalten. Diese können z. B. über Dihydrodicyclopentadienol gemäß der allgemeinen Formel V eingeführt worden sein.

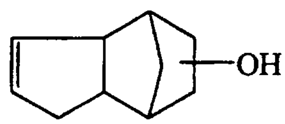

(V)

Gemäß einer bevorzugten Ausführungsform der erfindungsgemäßen Pulverlacke weist der Vernetzer (B) Polymere auf, die ausgewählt sind aus Polyestern, Polyurethanen oder deren Mischungen. Dabei ist bevorzugt, daß der Vernetzer terminale und/oder seitenständige Isoprenylgruppen, vorzugsweise 3-Methyl-3-buten, aufweist.

Polyurethane mit Isoprenylgruppen werden beispielsweise erhalten unter (Mit-) Verwendung der im Handel erhältlichen Isopentenole (Isoprenole) 2-Methyl-3-buten-2-ol, 2-Methyl-2-buten-1-ol und bevorzugt 3-Methyl-3-buten-1-ol. Die Polymerhauptkette des Vernetzers kann dabei linear, beliebig verzweigt oder dentrimer aufgebaut sein. Auch in der Polymerhauptkette rein C-C-verknüpfte Verbindungen und Verbindungen mit kettenständigen Ethergruppen sind möglich. Methoden zur Herstellung von 1-Propenylethern werden z. B. genannt bei J.V. Crivello et al. in Macromolecular Engineering, Plenum Press, New York, 1995. Kommerziell verfügbar sind Propenylether von Polyolen, wie 1,6-Di-(1-propenoxy)-decan oder Tetraethylenglykoldi-(1-propenylether). Des weiteren sind Isopropenylbenzyl-m-isopropylisocyanat, 1-Propenylglycidylether und Isoprenol (3-Methyl-3-butenol-1) verfügbar. Polyurethane, die endständig Allyl- und/oder Crotylgruppen aufweisen, können durch Mitverwendung von Allyl- oder Crotylalkohol, z. B. mit Rutenkatalysatoren, in Propenyl- bzw. Butenylgruppen übergeführt werden (Crivello, Pol. Mat. Sc. and Eng. 1995, Vol. 72, Seite 473).

Mit den genannten Isocyanaten, Glycidylethern und mit Isoprenol ist es möglich, terminal funktionalisierte Polymere aufzubauen. Dabei ist Isoprenol bevorzugt, weil es eine sehr gute UV-Reaktivität zusammen mit dem ungesättigten Polyesterharz (A) bewirkt und im Handel kostengünstig erhältlich ist.

Grundsätzlich sind für den Aufbau der Vernetzer (B) alle nach den allgemein bekannten Regeln herstellbaren Polyester und Polyurethane geeignet. Bevorzugt sind Polyurethane aus Isocyanaten und mit diesen reaktionsfähige Verbindungen, wie Hydroxyl- bzw. polyfunktionelle Hydroxylverbindungen, besonders bevorzugt in Kombination mit Isoprenol. Prepolymere Polyester zum Aufbau der Vernetzer (B) werden im Prinzip erhalten wie bei den ungesättigten Polyesterharzen (A) angegeben. Die Reaktivterminierung kann z. B. erreicht werden durch Mitverwendung von Isopropenylbenzyl-m-isopropylisocyanat, 1-Propenyl-glycidylether und Isoprenol. Bei dem Aufbau der Vernetzer (B) sind auch oligomere und/oder polymere Stoffe von besonderer Bedeutung, bevorzugt Polyhydroxylverbindungen, wie z. B. Polyetherpolyole, ethoxylierte und/oder propoxylierte Hydroxylverbindungen und Polytetrahydrofurane. Die Mitverwendung von Polyesterpolyolen, z. B. vom Typ der Polycaprolactone, ergeben Lackierungen von besonders guter Witterungsbeständigkeit, Flexibilität, Haftung, Chemikalienbeständigkeit und hoher Vergilbungsresistenz. Von Bedeutung sind auch cycloaliphatische und araliphatische Hydroxylverbindungen, wie z. B. hydriertes Bisphenol A, Bisphenol A und von Bisphenol A abgeleitete Verbindungen, wie Bisphenol-A-dialkanole. Beim Aufbau der für die Vernetzer (B) verwendeten Polyurethane ergibt die Mitverwendung von Melamin besonders gut kristallisierende Stoffe, die als trifunktionelle Vernetzer hochvernetzte Lackierungen mit besonders guten mechanischen Eigenschaften, wie Kratzfestigkeit und Abriebbeständigkeit ergeben.

Zum Aufbau der polymeren Vernetzer (B) unter (Mit-) Verwendung von Polyurethanen kommen für diese als Isocyanate alle bekannten Stoffe mit durchschnittlich mehr als einer Isocyanatgruppe in Frage, z. B. aliphatische, cycloaliphatische und/oder aromatische Isocyanate. Von besonderem Interesse sind auch polymerisierte Isocyanate, z. B. auf der Basis von Hexamethylendiisocyanat oder Isophorondiisocyanat. Auch hier kann die Auswahl nach Kriterien erfolgen, die dem Fachmann auf dem Gebiet der Urethane bekannt sind. So ergeben z. B. aliphatische und/oder

cycloaliphatische Isocyanate, wie Hexamethylendiisocyanat oder Isophorondiisocyanat (IPDI) besonders witterungsbeständige, vergilbungsfreie und chemikalienbeständige Lackierungen, hingegen aromatische Isocyanate, wie 4,4'-Methylendi(phenylisocyanat) (MDI) und Toluoldiisocyanat (TDI), Lackierungen mit besonders guten mechanischen Eigenschaften, die aber unter Lichteinfluß zum Vergilben neigen. Ein weiteres Auswahlkriterium ist der Preis. Z. B. kann für Lackierungen, bei denen die Farbe keine Rolle spielt, das billigere MDI dem teueren IPDI vorgezogen werden.

Über den Aufbau der Vernetzer (B) ist es möglich, in einem weiten Bereich die Endeigenschaften der ausgehärteten Lacke zu bestimmen. Lineare Vernetzer ohne seitenständige und mit ausschließlich terminalen Reaktivgruppen ergeben eine weitmaschigere Vernetzung mit größerer Netzbogenlänge und höherer Flexibilität der ausgehärteten Massen. Hochverzweigte und/oder seitenständig hochfunktionalisierte Vernetzer ergeben hohe Vernetzungsdichten und harte oder auch spröde Lacke. Die Härte bzw. Flexibilität hängt selbstverständlich nicht nur von der Art des Vernetzers (B), sondern auch vom Aufbau des ungesättigten Polyesterharzes (A) ab.

Die für den Aufbau der ungesättigten Polyester (A) der erfindungsgemäßen Pulverlacke erforderlichen speziellen Maßnahmen in Bezug auf die Anforderungen, z. B. an die Härte, Elastizität, Viskosität und den Erweichungspunkt, erfolgen nach dem Fachmann bekannten Regeln. So kann z. B. die Elastizität der ausgehärteten Polyesterharze durch die Kettenlänge der verwendeten Polyole oder Polycarbonsäuren variiert werden. Polyesterharze, die mit Ethylenglycol, Butandiol, Hexandiol oder Adipinsäure aufgebaut sind, weisen eine größere Flexibilität auf als z. B. solche auf der Basis von Neopentylglykol oder Phthalsäure. Des weiteren können die Eigenschaften der ungesättigten Polyester (A) über die Mitverwendung polyfunktioneller Verbindungen, die Verzweigungen in den Polyestermolekülen erzeugen, gesteuert werden. Solche polyfunktionellen Verbindungen sind z. B. Trimellitsäure oder Trimethylolpropan.

Gemäß einer bevorzugten Ausführungsform werden die ungesättigten Polyester (A) und/oder der Vemetzer (B) kristallin oder teilkristallin eingestellt, weil so in der Regel schon bei niedrigem Molekulargewicht blockfeste Polymere resultieren, die niedrigviskose Schmelzen und Lackierungen mit besonders gutem Verlauf ergeben. Die Regeln, nach denen Kristallinität in Polymeren erzeugt werden kann, sind dem Fachmann an sich bekannt. Kristallinität oder Teilkristallinität kann bei Polyurethanen oder Polyestern z. B. durch Mitverwendung linearer Verbindungen mit geradzahliger Kohlenstoffanzahl, wie Glykol, Butandiol, Hexandiol, Hexamethylendiisocyant, erzeugt werden.

Auch die Molekulargewichtsverteilung beeinflußt die Blockfestigkeit und Schmelzviskosität. Günstig ist eine enge Molekulargewichtsverteilung im Bereich niedriger Molekulargewichte, d. h. im Oligomerbereich, wobei eine Verteilung von 500 bis 5000 typisch ist. Geeignete Maßnahmen zur Einstellung des Molekulargewichts und einer gewünschten Molekulargewichtsverteilung bei ungesättigten Polyesterharzen und Polyurethanen sind an sich bekannt.

Die ungesättigten Polyester (A) und/oder der polymere Vernetzer (B) können jedoch auch amorph vorliegen. Sie werden dann jeweils bevorzugt so ausgewählt, daß sie ein Tg >50°C, besonders bevorzugt >80°C aufweisen.

Werden kristallin und amorph vorliegende Verbindungen kombiniert, so kann z.B. der polymere Vernetzer kristallin sein und ein niedriges Molekulargewicht aufweisen, so daß er bereits bei niedrigem Schmelzpunkt polymerisiert. Als ungesättigte Polyester (A) eignen sich dann amorphe Verbindungen mit hohem Tg, wie weiter oben bereits genannt.

Auch durch diese Kombination lassen sich Pulverlacke einer ausreichenden blockfesten Härte herstellen.

Die erfindungsgemäßen Pulverlacke können zusätzlich Additive enthalten, die ausgewählt sind aus Härtungsbeschleunigern, Fotoinitiatoren, Lichtschutzmitteln, Pigmenten, Füllstoffen, Verbindungen, die bei Wärmeeinwirkung Radikale bilden, weiteren üblichen Additiven oder beliebigen Mischungen davon.

Als Fotoinitiatoren kommen bekannte handelsübliche Verbindungen in Frage, bevorzugt werden Fotoinitiatoren eingesetzt, die bei der Aufschmelztemperatur der Lacke eine geringe Flüchtigkeit aufweisen. Bei geeigneter Auswahl des Fotoinitiators können auch pigmentierte UV-Lacke erhalten werden. Eine besonders hohe UV-Reaktivität zeichnen solche Verbindungen aus, die chemisch gebunden in dem Polyester (A) und/oder dem Vernetzer (B) H-Akzeptor-Gruppen aufweisen. Solche Verbindungen können erhalten werden durch die Mitverwendung von reaktiven Phenonverbindungen, wie Hydroxybenzophenon, Bishydroxybenzophenon oder Benzophenoncarbonsäuren bzw. deren Anhydride.

Die Erfindung betrifft auch ein Verfahren zum Beschichten oder Lackieren von Substratoberflächen mit dem erfindungsgemäßen Pulverlack. Dabei wird der Pulverlack auf das Substrat aufgebracht, auf diesem durch Anwendung von Wärme, bevorzugt durch Einstrahlung von NIR-Licht, geschmolzen und anschließend in der Schmelze, während des Abkühlens oder nach dem Abkühlen durch Einstrahlung energiereicher Strahlung gehärtet.

Als Substrat kommen die verschiedensten Materialien in Betracht, wie beispielsweise Holz, Kunststoffe, Holzwerkstoffe, Metall, Stein und vorlackierte Substrate.

Das erfindungsgemäße Verfahren kann so abgewandelt werden, daß die Substratoberfläche mit dem erfindungsgemäßen Pulverlack beschichtet oder lackiert wird, der Verbindungen enthält, die bei Wärmeeinwirkung Radikale bilden, wobei dann die thermische Härtung und die Härtung mit energiereicher Strahlung kombiniert werden. Insbesondere kann so eine zweistufige Härtung durchgeführt werden, die - wie bereits weiter oben erwähnt - unter dem Begriff "dual curing" bekannt ist. Hierbei wird z. B. zunächst eine thermische Härtung durchgeführt und dadurch der aufgetragene Pulverlack auf dem Substrat zu einem teilgehärteten Zustand vernetzt, um ihn zu einem späteren Zeitpunkt durch Härtung mit energiereicher Strahlung aushärten zu lassen. Wahlweise kann das Verfahren auch in umgekehrter Reihenfolge durchgeführt werden, wobei zunächst mit energiereicher Strahlung teilvernetzt wird, um den Pulverlack später durch thermische Härtung weiter auszuhärten. Neben der thermischen Härtung können auch beliebige andere Härtungsmechanismen mit der Härtung mittels energiereicher Strahlung kombiniert werden.

Im folgenden soll die Erfindung anhand von Ausführungsbeispielen näher erläutert werden.

**Beispiele:**

*Verbindung 1 (Monocarbonsäure gemäß Formel III)*

In einem Rührkolben mit Heizung und Rückflußkühler werden eingewogen

| | | |
|---|---|---|
| 710,81 g | Dicyclopentadien 93%-ig | (5,0 Mol) |
| 490,30 g | Maleinsäureanhydrid | (5,0 Mol) |

Die Mischung wird unter einem leichten Stickstoffstrom auf 125°C erhitzt und dann über einen Tropfrichter innerhalb von einer Stunde

| | | |
|---|---|---|
| 95,00 g | Wasser | (5,0 Mol + 5 g) |

zugegeben und bei 125°C eine Stunde lang nachreagieren gelassen. Es bildet sich eine Monocarbonsäure gemäß Formel V.

**Beispiel 1: Polyester (A)**

In einem Rührkolben mit Heizung und Destillieraufsatz werden

| | | |
|---|---|---|
| 1033,60 g | Verbindung 1 | (4,0 Mol) |
| 235,20 g | Maleinsäureanhydridylether | (2,4 Mol) |
| 278,40 g | Fumarsäure | (2,4 Mol) |
| 1344,00 g | Dicyclohexanolpropan | (5,6 Mol) |
| 630,00 g | Polyol TP 70 | (1,4 Mol) |
| 4,00 g | Fascat 420 I (Veresterungskatalysator) | |
| 0,50g | Hydrochinon | |

eingewogen. Es wird unter einem leichten Stickstoffstrom rasch auf 130°C aufgeheizt. Dann wird die Temperatur innerhalb von 4 1/2 Stunden allmählich auf 190°C erhöht und dabei das entstehende Kondensationswasser abdestilliert. Die entstandene Harzschmelze wird auf Aluminiumfolie ausgegossen und erstarrt beim Abkühlen. Der Polyester hat eine Säurezahl von 12 und eine Viskosität von 48 Pas/130°C und 31 Pas/140°C. Er ist gut mahlbar und die Pulver sind blockfest.

**Beispiel 2: Isoprenolterminierter Vernetzer (B) mit copolymer gebundenem Fotoinitiator**

In einem Rührkolben mit Heizung und Rückflußkühler werden

| | |
|---|---|
| 1000 g | Essigester |
| 123,84 g | Hexamethylendiisocyanat |
| 32,00 g | Toluylendiisocyanat |
| 0,30 g | Hydrochinonmonomethylether |

eingewogen und bei ca. 60°C innerhalb von 40 Min.

| | |
|---|---|
| 27,00 g | Butandiol 1,4 |
| 11,80 g | Trimethylolpropan |
| 39,60 g | 4-Hydroxybenzophenon |

(fortgesetzt)

| | |
|---|---|
| 68,90 g | Isoprenol (3-Methylbuten-3-ol-1) |

gemeinsam zulaufen gelassen. Es wird 2 Stunden lang bei ca. 60°C weitergerührt, danach abgekühlt und der entstandene Niederschlag abfiltriert und getrocknet. Man erhält 285 g eines weißen Pulvers mit einem Erweichungsbereich von 82 bis 97°C und einer Viskosität von 1077 mPas bei 130°C.

**Beispiel 3: Isoprenolterminierter Vernetzer (B)**

In einem Rührkolben mit Heizung und Rückflußkühler werden

| | |
|---|---|
| 1000 g | Essigester |
| 123,84 g | Hexamethylendiisocyanat |
| 32,00 g | Toluylendiisocyanat |
| 0,30 g | Hydrochinonmonomethylether |

eingewogen und bei ca. 60°C innerhalb von 40 Min.

| | |
|---|---|
| 36,00 g | Butandiol 1,4 |
| 11,80 g | Trimethylolpropan |
| 68,90 g | Isoprenol (3-Methylbuten-3-ol-1) |

gemeinsam zulaufen gelassen. Es wird 2 Stunden lang bei ca. 60°C weitergerührt , danach abgekühlt und der entstandene Niederschlag abfiltriert und getrocknet. Man erhält 237 g eines weißen Pulvers mit einem Erweichungsbereich von 75 bis 86°C und einer Viskosität von 658 mPas bei 130°C.

**Beispiel 4: Isoprenolterminierter Vernetzer (B) mit Polycaprolacton**

In einem Rührkolben mit Heizung und Rückflußkühler werden

| | |
|---|---|
| 1000 g | Essigester |
| 123,84 g | Hexamethylendiisocyanat |
| 32,00 g | Toluylendiisocyanat |
| 0,30 g | Hydrochinonmonomethylether |

eingewogen bei ca. 60°C innerhalb von 40 Min.

| | |
|---|---|
| 31,50 g | Butandiol 1,4 |
| 11,80 g | Trimethylolpropan |
| 23,00 g | Capa 200 (Polycaprolation, Solvay) |
| 68,90 g | Isoprenol (3-Methylbuten-3-ol-1) |

gemeinsam zulaufen gelassen. Es wird 2 Stunden lang bei ca. 60°C weitergerührt, danach abgekühlt und der entstandene Niederschlag abfiltriert und getrocknet. Man erhält 228 g eines weißen Pulvers mit einem Erweichungsbereich von 71 bis 87°C und einer Viskosität von 486 mPas bei 130°C.

**Herstellung von Pulverlackproben**

In einem kleinen Rührkolben werden die in Tabelle 1 aufgelisteten Bestandteile eingewogen, unter Stickstoff im Ölbad bei 120°C geschmolzen und 5 Minuten durchmischt. Danach werden die Schmelzen auf Aluminiumfolien ausgegossen und erkalten gelassen. Es resultieren in allen Fällen harte Harze, die in einer Labormühle gemahlen und auf eine Korngröße von < 40 µm gesiebt wurden. Die Probe mit dem Vernetzer gemäß Beispiel 4 konnte erst nach Zusatz von etwas Trockeneis gemahlen werden. Alle Pulver waren aber bei Raumtemperaturlagerung blockfest.

Vergleichsbeispiel mit VP 1 (Alftalat VAN 1743, kommerzieller ungesättigter Lackpolyester ohne DCPD-Gruppen)

Tabelle 1

| verwendete Pulverlacke | | | | |
|---|---|---|---|---|
| Beisp. Nr. | Polyester (A) | Vernetzer (B) | Darocure 2954 | Charakterisierung |
| 1. | 75 g VP1 | 25 g VB2 | - | (A) ohne DCPD,<br>(B) mit Fotoinitiatorgruppen |
| 2. | 75 g VP1 | 25 g VB2 | 3g | |
| 3. | 75 g VP1 | 25 g VB3 | 3g | (A) ohne DCPD,<br>(B) ohne Fotoinitiatorgruppen |
| 4. | 75 g VP1 | 25 g VB4 | 3g | (A) ohne DCPD,<br>(B) ohne Fotoinitiatorgruppen mit Capa |
| 5. | 75 g PA1 | 25 g VB2 | - | (A) mit DCPD,<br>(B) mit Fotoinitiatorgruppen |
| 6. | 75 g PA1 | 25 g VB2 | 3g | |
| 7. | 75 g PA 1 | 25 g VB3 | - | (A) mit DCPD,<br>(B) ohne Fotoinitiatorgruppen |
| 8. | 75 g PA1 | 25 g VB4 | - | (A) mit DCPD,<br>(B) ohne Fotoinitiatorgruppen mit Capa |

Dabei bedeuten:

| | |
|---|---|
| PA1 | der gemäß Beispiel 1 hergestellte ungesättigte Polyester (A) und |
| VB2-4 | die jeweils gemäß den Beispielen 2-4 hergestellten Vernetzer (B) |

Allen Proben wurde 1 % Modaflow (Verlaufshilfsmittel) und 0,5 % Benzoin (Entgasungshilfsmittel) zugesetzt.

**Prüfung der Beispiele auf Härtbarkeit und Lackqualität**

Von den Lackpulvern wurde auf gereinigte blanke Tiefziehbleche soviel aufgesiebt, daß nach der Härtung ca. 65 - 75 µm dicke Lackfilme resultierten. Die Tests wur- den an nachgemessenen, vergleichbar dicken Lackierungsstellen der Probetafeln durchgeführt. Die Probetafeln wurden auf einer auf 140°C vorerwärmten, regelbaren Heizplatte 3 Min. aufgeschmolzen, dann wurde die Schiebeblende einer vorgeheizten Quecksilberdampflampe (Hönle UV 400, Emissionsmaximum ca. 365 nm, Energiedichte 38 mW/cm$^2$) für die angegebene Zeit geöffnet, anschließend wieder geschlossen und die Bleche von der Heizplatte genommen. Die Tests wurden nach Lagerung über Nacht bei Raumtemperatur durchgeführt. Die Ergebnisse sind in Tabelle 2 angegeben.

Tabelle 2

| Prüfergebnisse | | | | | | |
|---|---|---|---|---|---|---|
| Beisp. Nr. | Belichtungszeit [s] | AC* | ESP* | PH* | GS* | Kommentar |
| 1. | 10 | lö* | <0,5 | 56 | 5 | ohne DCPD in (A), mit Fotoinitiator (Fi) in (B): mit geringer Reaktivität UV-härtbar |
| | 20 | 5 | < 0,5 | 51 | 5 | |
| | 60 | 10 | < 0,5 | 82 | 5 | |
| 2. | 10 | lö* | < 0,5 | 64 | 5 | ohne DCPD in (A), mit (Fi) in (B): und mit zugesetztem Fotoinitiator: besser UV-härtbar |
| | 20 | 10 | < 0,5 | 78 | 5 | |
| | 60 | 45 | 1,5 | 138 | 5 | |

Tabelle 2 (fortgesetzt)

| Prüfergebnisse | | | | | | |
|---|---|---|---|---|---|---|
| Beisp. Nr. | Belichtungszeit [s] | AC* | ESP* | PH* | GS* | Kommentar |
| 3. | 10 | lö* | < 0,5 | 93 | 5 | ohne DCPD in (A), kein (Fi) in (B), mit zugesetztem Fi: mit mäßiger Reaktivität UV-härtbar |
| | 20 | 5 | < 0,5 | 97 | 5 | |
| | 60 | 25 | 1,5 | 122 | 4 | |
| 4. | 10 | 30 | 2,5 | 81 | 4 | ohne DCPD in (A), kein (Fi) in (B), Capa in (B) mit zugesetztem Fi: mit mäßiger |
| | 20 | 60 | 3,5 | 97 | 4 | |
| | 60 | > 100 | 2,8 | 129 | 3 | Reaktivität UV-härtbar, bessere Haftung |
| 5. | 10 | 80 | 2,8 | 193 | 4 | DCPD in (A), kein (Fi) in (B): erfindungsgemäß mit sehr hoher Reaktivität UV-härtbar |
| | 20 | > 100 | 3,5 | 194 | 4 | |
| | 60 | > 100 | 3,0 | 192 | 3 | |
| 6. | 10 | > 100 | 2,5 | 194 | 4 | DCPD in (A), kein (Fi) in B): mit zugesetztem Fi: erfindungsgemäß mit sehr hoher UV-Reaktivität härtbar |
| | 20 | > 100 | 2,1 | 196 | 4 | |
| | 60 | > 100 | 3,5 | 193 | 4 | |
| 7. | 10 | > 100 | 2,2 | 193 | 4 | DCPD in (A), ohne (Fi) in B) mit zugesetztem Fi: erfindungsgemäß mit sehr hoher UV-Reaktivität härtbar |
| | 20 | > 100 | 3,1 | 201 | 4 | |
| | 60 | > 100 | 3,2 | 198 | 3 | |
| 8. | 10 | > 100 | 5,2 | 193 | 2 | DCPD in (A), ohne (Fi) in B) mit Capa in (B) mit zugesetztem Fi: erfindungsgemäß mit sehr hoher UV-Reaktivität härtbar, sehr gute Haftung und Elastizität |
| | 20 | > 100 | 7,1 | 201 | 0 | |
| | 60 | > 100 | 7,2 | 198 | 0 | |

Dabei bedeuten:
AC* Acetontest, Doppelhübe bis zur Erzeugung sichtbarer Spuren
ESP* Erichsen Slow Penetration ISO 1520/DIN 53 156
PH* Pendelhärte
GS* Gitterschnitthaftung ISO 2409/DIN 5315
lö* Harzfilm ist voll löslich in Aceton

**Patentansprüche**

1. Mit energiereicher Strahlung härtbare Pulverlacke, die ein ungesättigtes Polyesterharz (A) und einen polymeren Vernetzer (B) mit, bezogen auf die Polymerhauptkette, terminalen und/oder seitenständigen Propenyl-, Butenyl- und/oder Isoprenylgruppen, enthalten, wobei das ungesättigte Polyesterharz (A) und/oder der polymere Vernetzer (B) Struktureinheiten der allgemeinen Formel I und/oder II aufweisen.

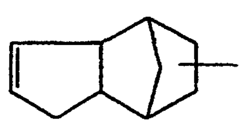

(I)

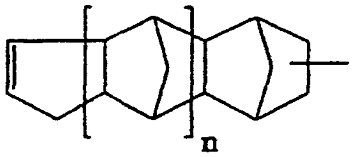

(II)

n = 1 - 10

2. Pulverlacke nach Anspruch 1, **dadurch gekennzeichnet, daß** die Struktureinheiten der allgemeinen Formel I und/oder II über Addukte von Dicyclopentadien oder dessen Oligomeren an α, β- ungesättigten Carbonsäuren oder deren Anhydriden eingeführt worden sind.

3. Pulverlacke nach Anspruch 1 oder 2, **dadurch gekennzeichnet, daß** die Struktureinheiten der allgemeinen Formel I und/oder II über Addukte von Dicyclopentadien oder dessen Oligomeren an Maleinsäureanhydrid gemäß der allgemeinen Formel III und/oder IV eingeführt worden sind.

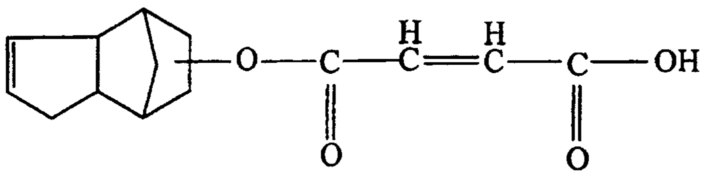

(III)

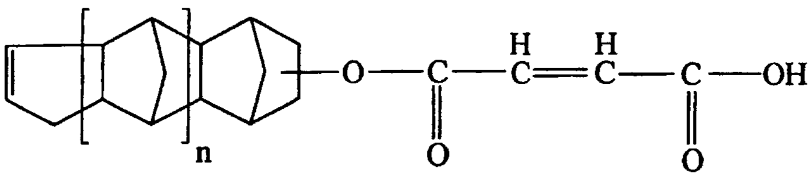

(IV)

n=1-10

4. Pulverlacke nach einem der Ansprüche 1 bis 3, **dadurch gekennzeichnet, daß** der Vernetzer (B) zusätzlich zu dem ungesättigten Polyesterharz gesättigte Polyester mit Struktureinheiten der allgemeinen Formel I und/oder II enthält.

5. Pulverlacke nach Anspruch 4, **dadurch gekennzeichnet, daß** die Struktureinheiten der allgemeinen Formel I und/oder II in den gesättigten Polyestern über eine Verbindung der allgemeinen Formel V eingeführt worden sind.

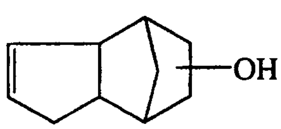

(V)

6. Pulverlacke nach einem der Ansprüche 1 bis 5, **dadurch gekennzeichnet, daß** der Vernetzer (B) Polymere aufweist, die ausgewählt sind aus Polyestern, Polyurethanen oder deren Mischungen.

7. Pulverlacke nach Anspruch 6, **dadurch gekennzeichnet, daß** der Vernetzer (B) terminale und/oder seitenständige

Isoprenylgruppen, vorzugsweise 3-Methyl-3-buten, aufweist.

8. Pulverlacke nach einem der Ansprüche 1 bis 7, **dadurch gekennzeichnet, daß** sie zusätzlich Additive enthalten, die ausgewählt sind aus Härtungsbeschleunigern, Fotoinitiatoren, Lichtschutzmitteln, Pigmenten, Füllstoffen, Verbindungen, die bei Wärmeeinwirkung Radikale bilden, weiteren üblichen Additiven oder Mischungen davon.

9. Pulverlacke nach Anspruch 8, **dadurch gekennzeichnet, daß** sie Fotoinitiatoren enthalten, die chemisch an das Polyesterharz (A) und/oder den Vernetzer (B) gebunden sind.

10. Verfahren zum Beschichten oder Lackieren von Substratoberflächen mit einem Pulverlack gemäß einem der Ansprüche 1 bis 9, **dadurch gekennzeichnet, daß** der Pulverlack auf das Substrat aufgebracht, auf diesem durch Anwendung von Wärme, bevorzugt durch Einstrahlung von NIR-Licht, geschmolzen und anschließend in der Schmelze, während des Abkühlens oder nach dem Abkühlen durch Einstrahlung energiereicher Strahlung gehärtet wird.

11. Verfahren nach Anspruch 10, bei dem die Substratoberfläche mit einem Pulverlack gemäß Anspruch 8 oder 9 beschichtet oder lackiert wird, der Verbindungen enthält, die bei Wärmeeinwirkung Radikale bilden, wobei die thermische Härtung und die Härtung mit energiereicher Strahlung kombiniert werden.

12. Verfahren nach Anspruch 11, **gekennzeichnet durch** eine zweistufige Härtung, bei welcher der Pulverlack **durch** eine thermische Härtung zu einem teilgehärteten Zustand vernetzt und zu einem späteren Zeitpunkt **durch** Härtung mit energiereicher Strahlung ausgehärtet wird.

13. Verfahren nach Anspruch 12, bei dem zunächst mit energiereicher Strahlung teilvernetzt und später durch thermische Härtung ausgehärtet wird.

## Claims

1. A powder coating material curable with high-energy radiation, comprising an unsaturated polyester resin (A) and a polymeric crosslinker (B) containing, based on the polymer main chain, terminal and/or pendant propenyl, butenyl and/or isoprenyl groups, said unsaturated polyester resin (A) and/or said polymeric crosslinker (B) comprising structural units of the general formula I and/or II.

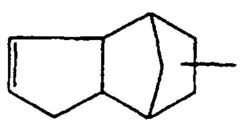

(I)

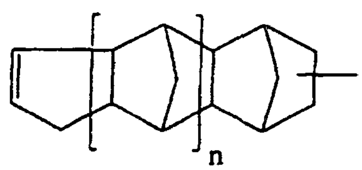

(II)

n = 1 - 10

2. The powder coating material as claimed in claim 1, wherein the structural units of the general formula I and/or II have been introduced by way of adducts of dicyclopentadiene or its oligomers with α,β-unsaturated carboxylic acids or their anhydrides.

3. The powder coating material as claimed in claim 1 or 2, wherein the structural units of the general formula I and/or II have been introduced by way of adducts of dicyclopentadiene or its oligomers with maleic anhydride in accordance with the general formula III and/or IV.

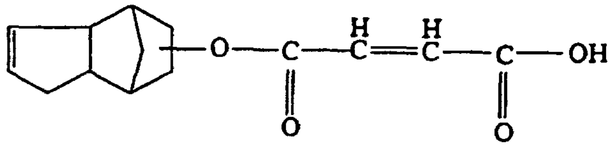

(III)

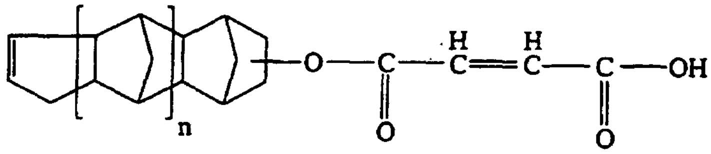

(IV)

n=1-10

4. The powder coating material as claimed in any of claims 1 to 3, wherein additionally to the unsaturated polyester resin the crosslinker (B) comprises saturated polyesters having structural units of the general formula I and/or II.

5. The powder coating material as claimed in claim 4, wherein the structural units of the general formula I and/or II have been introduced into the saturated polyesters by way of a compound of the general formula V.

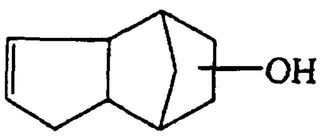

(V)

6. The powder coating material as claimed in any of claims 1 to 5, wherein the crosslinker (B) comprises polymers selected from polyesters, polyurethanes and mixtures thereof.

7. The powder coating material as claimed in claim 6, wherein the crosslinker (B) comprises terminal and/or pendant isoprenyl groups, preferably 3-methyl-3-butene.

8. The powder coating material as claimed in any of claims 1 to 7, further comprising additives selected from curing accelerators, photoinitiators, light stabilizers, pigments, fillers, compounds which when exposed to heat form free radicals, further customary additives, and mixtures thereof.

9. The powder coating material as claimed in claim 8, comprising photoinitiators attached chemically to the polyester resin (A) and/or the crosslinker (B).

10. A method of coating substrate surfaces with a powder coating material as claimed in any of claims 1 to 9, which comprises applying said powder coating material to the substrate, melting it thereon by application of heat, preferably by exposure to NIR light, and then curing it in the melt, in the course of cooling or after cooling, by exposing it to high-energy radiation.

11. The method as claimed in claim 10, wherein the substrate surface is coated with a powder coating material as claimed in claim 8 or 9 which comprises compounds which on exposure to heat form free radicals, curing being brought about with a combination of heat and high-energy radiation.

12. The method as claimed in claim 11, comprising a two-stage cure in which the powder coating material is crosslinked to a part-cured state by thermal curing and at a later point in time is cured to completion with high-energy radiation.

13. The method as claimed in claim 12, comprising firstly partial crosslinking with high-energy radiation and subsequent

curing to completion by heat.

## Revendications

1. Matériaux de revêtement pulvérulents durcissables par un rayonnement de haute énergie, comprenant une résine de polyester insaturé (A) et un agent de réticulation polymère (B) renfermant, par rapport à la chaîne principale polymère, des groupes propényle, butényle et/ou isoprényle terminaux et/ou latéraux, la résine de polyester insaturé (A) et/ou l'agent de réticulation polymère (B) renfermant des motifs structuraux de formules générales I et/ou II.

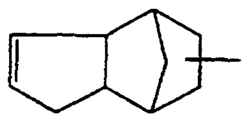

(I)

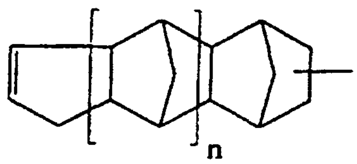

(II)

n = 1 - 10

2. Matériaux de revêtement pulvérulents selon la revendication 1, **caractérisés en ce que** les motifs structuraux de formules générales I et/ou II ont été introduits par l'intermédiaire de produits d'addition du dicyclopentadiène ou de ses oligomères sur des acides carboxyliques α, β-insaturés ou leurs anhydrides.

3. Matériaux de revêtement pulvérulents selon la revendication 1 ou 2, **caractérisés en ce que** les motifs structuraux de formules générales I et/ou II ont été introduits par l'intermédiaire de produits d'addition du dicyclopentadiène ou de ses oligomères sur l'anhydride maléique selon les formules générales III et/ou IV.

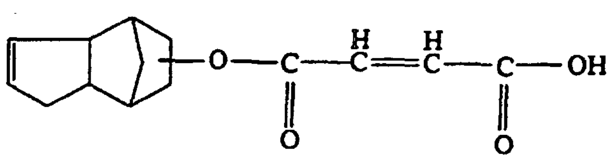

(III)

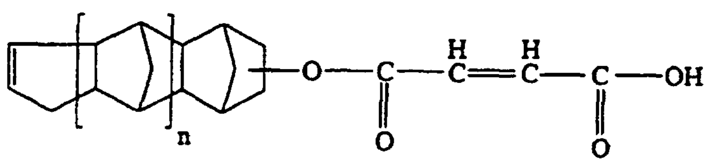

(IV)

n=1-10

4. Matériaux de revêtement pulvérulents selon l'une quelconque des revendications 1 à 3, **caractérisés en ce que** l'agent de réticulation (B) comprend, en plus de la résine de polyester insaturé, des polyesters saturés renfermant des motifs structuraux de formules générales I et/ou II.

5. Matériaux de revêtement pulvérulents selon la revendication 4, **caractérisés en ce que** les motifs structuraux de formules générales I et/ou II ont été introduits dans les polyesters saturés par l'intermédiaire d'un composé de

formule générale V.

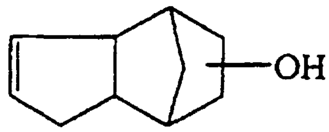

(V)

**6.** Matériaux de revêtement pulvérulents selon l'une quelconque des revendications 1 à 5, **caractérisés en ce que** l'agent de réticulation (B) comprend des polymères choisis parmi des polyesters, des polyuréthanes ou leurs mélanges.

**7.** Matériaux de revêtement pulvérulents selon la revendication 6, **caractérisés en ce que** l'agent de réticulation (B) renferme des groupes isoprényle terminaux et/ou latéraux, de préférence du 3-méthyl-3-butène.

**8.** Matériaux de revêtement pulvérulents selon l'une quelconque des revendications 1 à 7, **caractérisés en ce qu'**ils comprennent en outre des additifs qui sont choisis parmi des accélérateurs de durcissement, des photoamorceurs, des photostabilisants, des pigments, des charges, des composés formant des radicaux sous l'action de la chaleur, d'autres additifs habituels ou leurs mélanges.

**9.** Matériaux de revêtement pulvérulents selon la revendication 8, **caractérisés en ce qu'**ils comprennent des photoamorceurs qui sont liés chimiquement à la résine de polyester (A) et/ou à l'agent de réticulation (B).

**10.** Procédé de revêtement ou de vernissage de surfaces de substrats avec un matériau de revêtement pulvérulent selon l'une quelconque des revendications 1 à 9, **caractérisé en ce que** le matériau de revêtement pulvérulent est appliqué sur le substrat, fondu sur celui-ci par l'emploi de la chaleur, de préférence par irradiation avec de la lumière NIR, puis durci dans la masse fondue, durant le refroidissement ou après le refroidissement, par irradiation avec un rayonnement de haute énergie.

**11.** Procédé selon la revendication 10, dans lequel la surface de substrat est revêtue ou vernie avec un matériau de revêtement pulvérulent selon la revendication 8 ou 9, comprenant des composés formant des radicaux sous l'action de la chaleur, le durcissement thermique et le durcissement avec un rayonnement de haute énergie étant combinés.

**12.** Procédé selon la revendication 11, **caractérisé par** un durcissement en deux étapes, dans lequel le matériau de revêtement pulvérulent est réticulé à un état partiellement durci par un durcissement thermique et totalement durci ultérieurement par durcissement avec un rayonnement de haute énergie.

**13.** Procédé selon la revendication 12, dans lequel on procède d'abord à une réticulation partielle avec un rayonnement de haute énergie et ultérieurement au durcissement total par durcissement thermique.